# EUROPEAN PATENT SPECIFICATION

(11) **EP 1 480 214 B1**
(45) Date of publication and mention of the grant of the patent: **20.08.2008**
(21) Application number: 04252897.6
(22) Date of filing: 19.05.2004
(51) Int. Cl.: G11B 20/12

(54) **Small-sized optical disc, data recording apparatus, and a method for recording data to the same**
Kleiner optischer Speicher, Datenaufzeichnungsvorrichtung und -verfahren darauf
Disque optique de petit format, appareil d'enregistrement de données et méthode pour y enregistrer des données

(30) Priority: 19.05.2003 KR 2003031542
(43) Date of publication of application: 24.11.2004
(73) Proprietor: SAMSUNG ELECTRONICS CO., LTD., Suwon-city, Gyeonggi-do (KR)
(72) Inventor: Kim, Ki-hyun, Bandang-gu, Seongnam-si, Gyeonggi-do (KR); Lee, Yoon-woo, Geyonggi-do (KR); Park, Ju-young, Yongin-si, Gyeonggi-do (KR)
(74) Representative: Robinson, Ian Michael

(56) References cited:
- EP-A- 0 939 398
- EP-A- 1 134 738
- EP-A- 1 318 520
- DE-A- 3 604 916
- US-A- 4 550 347
- US-A- 5 146 347
- US-A1- 2001 033 532

## Description

The present invention relates to a small-sized optical disc, an apparatus to record data to the small-sized optical disc, and a method of recording data to the small-sized optical disc.

Different types of information recording media include magnetic discs such as a floppy disc and a hard disc, magnetic tape, semiconductor memory chips such as ROM and RAM, and optical discs such as CDs and DVDs.

Among the information recording mediums, the recording capacity of an optical disc has rapidly increased along with the development of semiconductor techniques and signal processing techniques, and the price of optical discs is relatively low.

Information recorded in an optical disc is recorded as block units with a predetermined size. The block unit in which data is recorded is also a basic unit for error correction code (ECC). A size of the ECC block used in a conventional optical disc is generally 32 KByte or 64 KByte.

Attempts have been made to use the optical disc as an information recording medium for recording and/or reproducing both sound and an image simultaneously with a portable electronic device such as a camcorder.

However, use of the optical disc in such a portable electronic device like a camcorder has a few shortcomings. That is, the widely used size of the optical disc, which is 80mm or 120 mm, is too big for a camcorder, and power consumption is too high using the conventionally sized disc.

Accordingly, to use an optical disc as an information recording medium for a portable electronic device, an optical disc with a smaller size, but higher recording density, than a conventional optical disc is required.

However, when recording data on a small-sized optical disc with a conventional size ECC block unit, a problem may occur in an inner area of the small-sized optical disc.

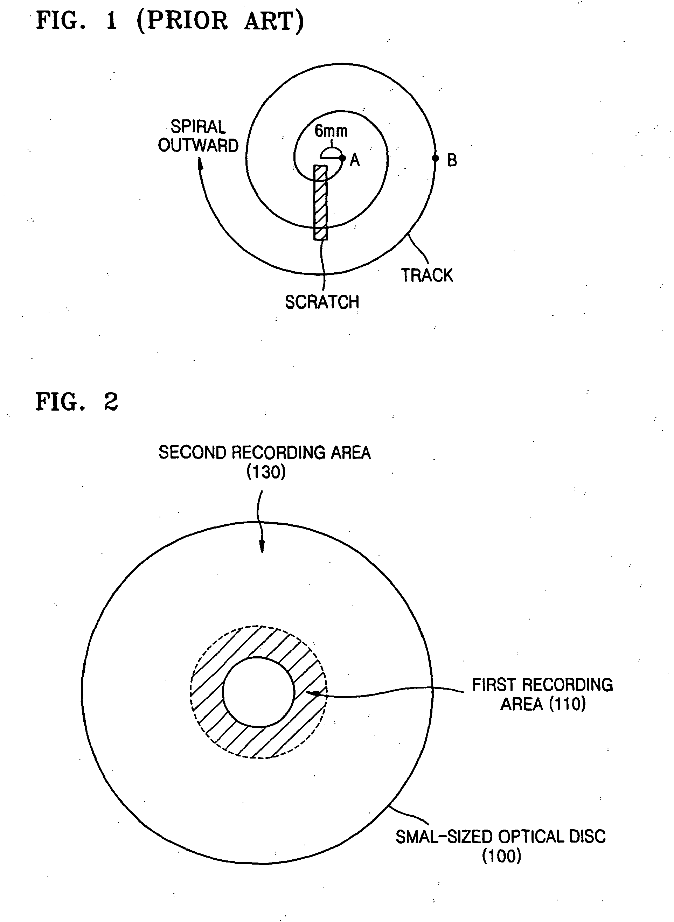

Figure 1 is a schematic drawing illustrating an inner area of a small-sized optical disc in which data is recorded in conventional ECC block units.

Referring to Figure 1, when a 64Kbyte ECC block unit is recorded from an inner area to an outer area in the data recording area within a radius of 6 mm from the center of a small-sized optical disc, the ECC block unit is recorded in the area from point A to point B in Figure 1. That is, when recording a ECC block unit from the innermost area of the small-sized optical disc, it is recorded over almost two tracks. If there is a scratch on an inner area in a radial direction, as shown in Figure 1, a serious error may occur in the ECC block unit recorded in the innermost area, thus reducing error correction capability remarkably.

That is, when the ECC block unit is not recorded to only one track, but to two tracks of the small-sized optical disc, the error correction capability of the recorded unit ECC block is remarkably reduced if there is any defect on the inner area such as a scratch.

A conventional optical disc has a lead-in area, a user data area, and a lead-out area sequentially formed from an inner radius to an outer radius of the conventional optical disc. Generally important information for reproducing data of the optical disc is recorded in an inner area corresponding to the lead-in area.

Therefore, if there is a defect in the inner area, such as a scratch on the optical disc, error correction capability of the ECC block unit recorded in the inner area is greatly reduced.

US-A-5 146 347 discloses a controlled method and apparatus for operating a disc player for a composite disc having a first region containing digital audio signals and a second region containing digital audio signals and frequency modulated video signals recorded in multiplex form for which the rotational speed for playing the second region is significantly greater than for the first region. When the power source of the player is turned ON, if the spindle motor is already rotating, such as will occur especially when the power source is turned OFF then immediately back ON when playing the second region, the spindle motor is stopped and the information detecting point of the pickup of the player is moved to the innermost circumferential position of the first region to be ready to immediately read table of contents information when a play start instruction is received. The precharacterising portions of the appended claims are based on this document.

DE-A-36 04 916 discloses an optical disc having spirally or coaxially (concentrically) arranged tracks, which are subdivided into a number of track groups. Each track group contains a predetermined number of tracks, in each case provided with a block head. The block heads of the respective tracks are aligned with one another in the radial direction of the optical disc.

According to the present invention there is provided an apparatus and method as set forth in the appended claims. Preferred features of the invention will be apparent from the dependent claims, and the description which follows.

The present invention provides a small-sized optical disc with a high error correction capability when there is a defect on an inner area on which important information is recorded.

The present invention also provides a data recording apparatus and a method of recording data with a high error correction capability when there is a defect in an inner area of the small-sized optical disc on which important information is recorded.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
Figure 1 is a schematic drawing of an innermost area of a small-sized optical disc on which conventional unit ECC block data is recorded;
Figure 2 is a schematic drawing of a small-sized optical disc according to an embodiment of the present invention;
Figure 3 is a schematic drawing showing a first recording unit and a second recording unit;
Figure 4 shows disc tracks formed according to a wobble signal that indicates an address signal;
Figures 5A and 5B show address data corresponding to each of a first recording unit and a second recording unit;
Figure 6 is a block diagram of a data recording apparatus according to an embodiment of the present invention;
Figure 7 shows an example of an optical disc information table in which information regarding the small-sized optical disc is recorded; and
Figure 8 is a block diagram illustrating a method of recording data according to an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the Figures.

Figure 2 is a schematic drawing of a small-sized optical disc according to an embodiment of the present invention.

Referring to Figure 2, a small-sized optical disc 100 includes a first recording area 110 and a second recording area 130.

The first recording area 110 extends from an innermost circumference at which data can be recorded to a predetermined circumference. In the first recording area 110, data is recorded in first recording units.

The second recording area 130 extends from the predetermined circumference to an outermost circumference at which data can be recorded. In the second recording area 130, data is recorded in second recording units.

The first recording unit and the second recording unit respectively correspond to the ECC block of the first recording area 110 and the second recording area 130.

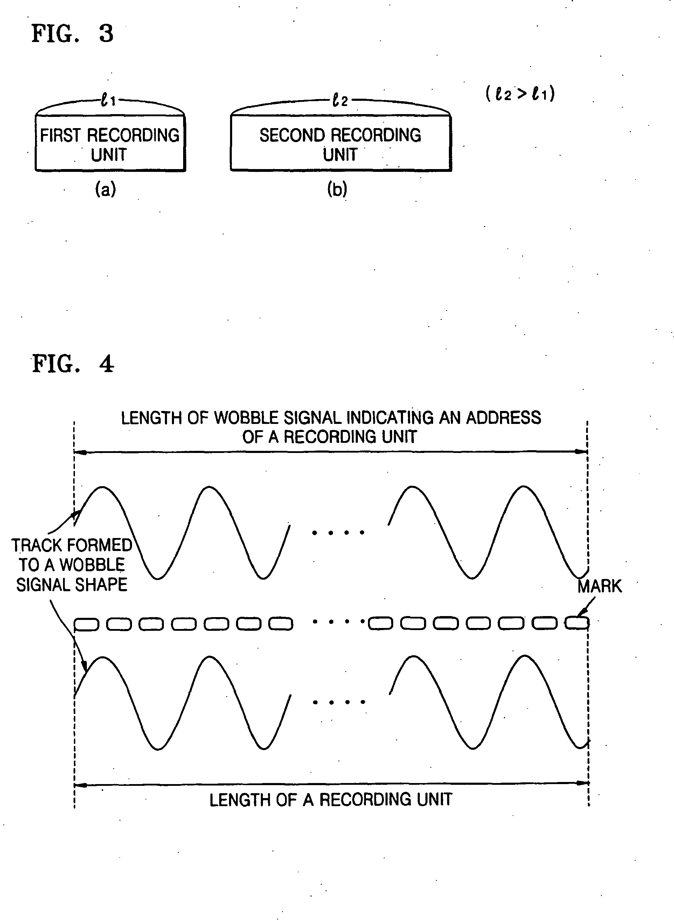

Figure 3 is a schematic drawing showing a first recording unit and a second recording unit. Referring to Figure 3, the first recording unit has a length l₁, and the second recording unit has a length l₂.

The length l₁ of the first recording unit is less than the length l₂ of the second recording unit, and less than a length of a predetermined track of the first recording area 110 of the small-sized optical disc 100. Hereinafter, it is assumed that the length l₁ of the first recording unit is less than the length of the innermost track of the small-sized optical disc.

That is, as described above, if there is any defect in the innermost area of the small-sized optical disc, the error correction capability of the ECC block recorded on the innermost area is remarkably reduced. To alleviate this problem, the first recording unit data, the first recording unit being shorter than the innermost track, is recorded to the inner area, i.e., the first recording area 110 of the small-sized optical disc 100, and the second recording unit data is recorded to the second recording area 130.

The length of the second recording unit is greater than that of the first recording unit because the larger the ECC block unit, i.e., the record unit, the greater the error correction capability. The size of the ECC block indicates the amount of data recorded in the ECC block. As the size of the ECC block increases, a physical length of the ECC block recorded to the optical disc increases.

Therefore, the first recording unit data, the first recording unit being shorter than the innermost track of the small-sized optical disc 100, is recorded to the first recording area 110, even though the error correction capability is reduced. And the second recording unit data, the second recording unit being longer than the first recording unit, is recorded to the second recording area 130.

When data is recorded from an inner area to an outer area of the small-sized optical disc 100, data to be recorded to a lead-in area of the small-sized optical disc 100 will be recorded to the first recording area 110, which corresponds to the inner area. Generally, the data recorded to the lead-in area of the small-sized optical disc 100 is important data for using the optical disc. Therefore, for reliability of this data, identical data may be recorded in at least two first recording units when recorded to the first recording area 110.

When data is recorded to a small-sized optical disc 100 with multiple recording units having different lengths from each other, a method of recording address data that indicates an address of each recording unit on the small-sized optical disc should be considered.

Figure 4 shows disc tracks formed according to a wobble signal that indicates an address signal.

One method of recording address data that indicates an address of a recording unit is a method of recording the addressing information by forming the track of the optical disc with a shape equivalent to a wobble signal, after producing the wobble signal by wobble modulating the address information. A few methods of wobble modulation are Monotone Wobble (MW), Saw Tooth Wobble (STW), Binary Phase Shift Keying (BPSK), and Frequency Shift Keying (FSK). The wobble modulation method is widely used to record address information of the optical disc since it is easy to access the optical disc such as motor speed control.

Referring to Figure 4, a track is formed with a shape similar to the shape of the wobble produced according to the MW method that modulates the address information into a sign wave with a single frequency. At the center of the track, a mark corresponding to the recorded data is formed.

A wobble signal that indicates an address of a record unit formed on the track has a length equivalent to a recording unit.

However, in the small-sized optical disc 100 according to an embodiment of the present invention, data is recorded with a plurality of recording units having different lengths. Therefore, the address data is recorded by adjusting the length of the first recording unit in consideration of a complexity of a system and an efficiency of data processing.

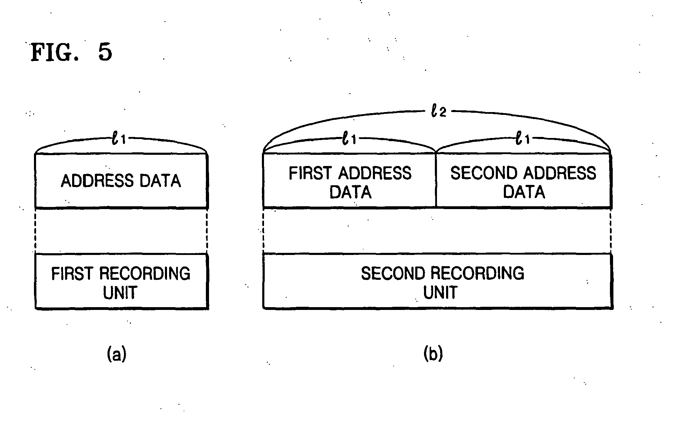

Figures 5A and 5B show address data corresponding to each of the first recording unit and the second recording unit. Referring to Figure 5A, address data corresponding to the first recording unit is recorded with the length l₁ of the first recording unit. Referring to Figure 5B, address data corresponding to the second recording unit is recorded with the length l₂ by combining first and second address data each having the data length of l₁. This is a case in which the length l₂ of the second recording unit and the address data corresponding to the second recording unit is equal to two times the length l₁ of the first recording unit.

The first address data and the second address data depicted in Figure 5B together indicate an address of one second recording unit. There are several methods of recording the first address data and the second address data by dividing an address that indicates an address of one second recording unit. For example, data that indicates one address can be recorded as first address data and second address data, repeatedly. Alternately, address data modulated according to a predetermined method can be divided into two parts, and the first half recorded as the first address data and the second half recorded as the second address data.

A data recording apparatus for a small-sized optical disc according to an embodiment of the present invention will now be described.

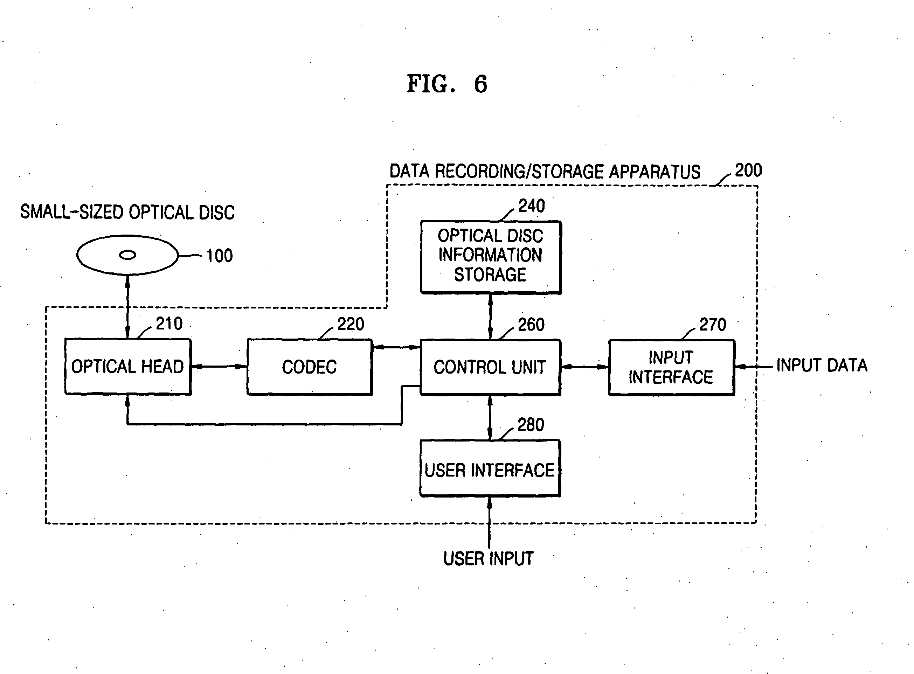

Figure 6 is a block diagram of a data recording apparatus 200 according to an embodiment of the present invention.

Referring to Figure 6, the data recording apparatus 200 comprises an optical head 210, a codec 220, an optical disc information storage unit 240, a control unit 260, an input data interface unit 270, and a user interface unit 280.

The optical head 210 records data on the small-sized optical disc 100, or reads data from the small-sized optical disc 100, in response to the control of the control unit 260.

The codec 220 encodes or modulates data to be recorded to the small-sized optical disc 100, or decodes or demodulates data read from the small-sized optical disc 100.

Information regarding the small-sized optical disc 100 is stored in the optical disc information storage unit 240.

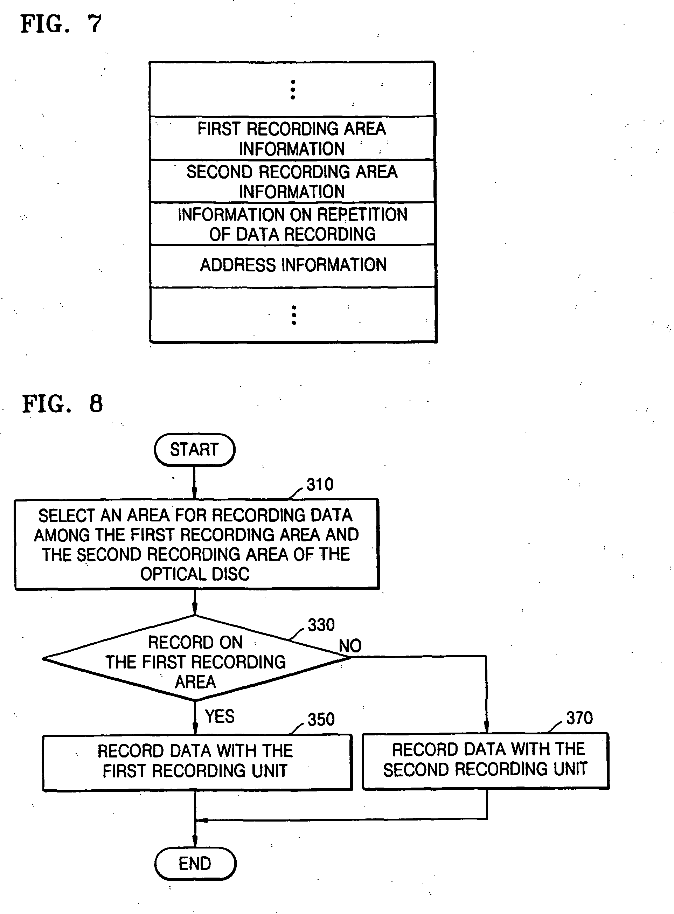

Figure 7 shows an example of an optical disc information table stored in the optical disc information storage unit 240, in which information regarding the small-sized optical disc is stored. First recording area information, second recording area information, information on repetition of data recording, and address information are recorded in the optical disc information table depicted in Figure 7.

The first recording area information includes address information of the first recording units to be recorded to the first recording area 110, and the second recording area information includes address information of the second recording units to be recorded to the second recording area.

The information on repetition of data recording includes address information of at least two of the first recording units in which the same data is recorded, in order to record the same data repeatedly in the first recording area 110.

The address information includes information indicating in what way the address data corresponding to the first recording unit and the address data corresponding to the second recording unit are recorded, or how the data is processed to obtain the address data.

The control unit 260 controls the optical head 210 to record data with the first recording unit to the first recording area 110, and to record data with the second recording unit to the second recording area 130, by referring to the address information of the first recording area 110 and the address information of the second recording area 130 recorded in the optical disc information table of the optical disc information storage unit 240.

The control unit 260 also controls the optical head 210 to record identical data in at least two of the first recording units when data is recorded in the first recording area 110.

The input data interface unit 270 transmits inputted data to be recorded to the small-sized optical disc 100 to the control unit 260.

The user interface unit 280 transmits data recording orders received from a user to the control unit 260.

The data recording apparatus 200 according to an embodiment of the present invention can also be used as an apparatus for reproducing data recorded to the small-sized optical disc.

With reference to the data recording apparatus 200 described above, a method of recording data to the small-sized optical disc 100 according to an embodiment of the present invention will be described.

Figure 8 is a flow chart illustrating a method of recording data according to an embodiment of the present invention.

Referring to Figure 8, the control unit 260 determines one of the first recording area 110 and second recording area 130 of the small-sized optical disc 100 for data recording after receiving a command to record data, and data to be recorded, from a user (operation 310).

It is thus determined whether the first recording area 110 is selected (operation 330).

If the first recording area 110 is selected, the optical head 210 records data with the first recording unit, which is shorter than the innermost circumference of the small-sized optical disc 100, in response to the control of the control unit 260 (operation 350).

On the other hand, if the second recording area 130 is selected, the optical head 210 records data with the second recording unit, which has a greater length than the first recording unit, in response to the control of the control unit 260 (operation 370).

When data is recorded to the first recording area 110 during operation 350, the control unit 260 controls the optical head 210 to record the same data with at least two first recording units.

The present invention can also be embodied as computer readable code on a computer readable recording medium. The computer readable recoding medium is any data storage device that can store data which can be thereafter read by a computer system. Examples of the computer readable recording medium include read-only memory (ROM), random access memory (RAM), CD-ROMs, magnetic tapes, floppy discs, optical data storage devices, and carrier waves. The computer readable recording medium can also be distributed over network coupled computer systems so that the computer readable code is stored and executed in a distributed fashion.

As described above, according to an embodiment of the present invention, a small-sized optical disc can provide an error correction capability of data recorded to an inner area of the optical disc by recording the same data twice, with recording units each having a shorter length than the length of an innermost track.

Also, an apparatus to record data on an optical disc, and a method of recording data on an optical disc, improve error correction capability when reproducing data recorded to the small-sized optical disc by recording data with recording units each having a shorter length than the length of an innermost track, and recording the same data at least twice.

Although a few preferred embodiments have been shown and described, it will be appreciated by those skilled in the art that various changes and modifications might be made without departing from the scope of the invention, as defined in the appended claims.

## Claims

1. An optical disc (100) comprising a plurality of recording areas (110, 130);
having recorded thereon:
first recording units in an inner recording area (110) that are shorter than a predetermined track of the inner recording area (110); and
second recording units in an outer recording area (130) that are longer than the recording units in the inner recording area (110).

2. The optical disc (100) of claim 1, wherein identical data is recorded in at least two of the recording units in the inner recording area (110).

3. The optical disc (100) of claim 1 or 2, wherein address data indicating addresses of each of the first and second recording units is recorded on the optical disc (100), lengths of the address data indicating the address of each of the first recording units are equal to the length of each of the first recording units, and lengths of the address data indicating the address of each of the second recording units are equal to the length of each of the second recording units.

4. The optical disc (100) of claim 3, wherein the length of each of the second recording units is an integer multiple of the length of each of the first recording units, and the integer is greater than 1.

5. The optical disc (100) of claim 3 or 4, wherein the address data indicating the addresses of each of the second recording units is recorded as first address data and second address data, the first address data and the second address data each having the length of each of the first recording units.

6. The optical disc (100) of any preceding claim, wherein the predetermined track of the first recording area (110) is an innermost track of the optical disc (100).

7. The optical disc (100) of any preceding claim, wherein the predetermined track of the optical disc (100) is formed according to a shape of a wobble signal.

8. The optical disc (100) of claim 7, wherein the wobble signal is produced by wobble modulating address information for the first and second recording units.

9. The optical disc (100) of claim 8, wherein the wobble modulation is one of Monotone Wobble (MW), Saw Tooth Wobble (STW), Binary Phase Shift Keying (BPSK), and Frequency Shift Keying (FSK).

10. The optical disc (100) of claim 7, 8 or 9, wherein the wobble signal indicates an address of one of the first or second recording units, and the wobble signal has a length equal to the one of the first or second recording units.

11. The optical disc (100) of any preceding claim wherein:
the inner recording area (110) extends from an innermost circumference to a predetermined circumference of the optical disc (100); and
the outer recording area (130) extends from the predetermined circumference to an outermost circumference.

12. A data recording apparatus for an optical disc (100) having an inner recording area (110), and an outer recording area (130), the apparatus comprising:
an optical head (210); and
a control unit (260) arranged to control the optical head (210);
**characterised in that**:
the control unit (260) is arranged to control the optical head (210) to record data in first recording units, each of the first recording units having a shorter length than a predetermined track of the inner recording area (110), in the inner recording area (110), and to record the data in second recording units, each of the second recording units having a greater length than each of the first recording units, in the outer recording area (130).

13. The data recording apparatus of claim 12, further comprising an optical disc information storage unit (240) in which address information of the inner recording area (110) and the outer recording area (130) are stored, wherein the control unit (260) controls the optical head (210) to record the data in the inner recording area (110) and the outer recording area (130), respectively, by referring to the address information stored in the optical disc (100) information storage unit (240).

14. The data recording apparatus of claim 12 or 13, wherein the control unit (260) controls the optical head (210) to record identical data in at least two of the first recording units in response to the data being recorded in the inner recording area (110).

15. The data recording apparatus of claim 12, 13 or 14, wherein the inner recording area (110) extends from an innermost circumference to a predetermined circumference of the optical disc (100), and the outer recording area (130) extends from the predetermined circumference to an outermost circumference.

16. A method of recording data to an optical disc (100), the method **characterised by** the steps of:
selecting a data recording area from one of an inner recording area (110), and an outer recording area (130); and
recording the data in first recording units, each of the first recording units having a shorter length than a predetermined track of the inner recording area (110), in response to the data being recorded in the inner recording area (110); and
recording the data in second recording units, each of the second recording units having a longer length than the first recording units, in response to the data being recorded in the outer recording area (130).

17. The method of claim 16, wherein identical data is recorded in at least two of the first recording units in response to the data being recorded in the inner recording area (110).

18. The method of claim 16 or 17, wherein the inner recording area (110) extends from an innermost circumference to a predetermined circumference of the optical disc (100), and the outer recording area (130) extends from the predetermined circumference to an outermost circumference.

19. A recording medium having recorded thereon computer implementable instructions to perform the method of any of claims 16 to 18.

## Patentansprüche

1. Optische Platte (100), eine Vielzahl von Aufzeichnungsbereichen (110, 130) umfassend,
die darauf aufgezeichnet hat:
erste Aufzeichnungseinheiten, in einem inneren Aufzeichnungsbereich (110), die kürzer als eine vorgegebene Spur des inneren Aufzeichnungsbereichs (110) sind, und
zweite Aufzeichnungseinheiten, in einem äußeren Aufzeichnungsbereich (130), die länger als die Aufzeichnungseinheiten in dem inneren Aufzeichnungsbereich (110) sind.

2. Optische Platte (100) nach Anspruch 1, wobei identische Daten in wenigstens zwei der Aufzeichnungseinheiten in dem inneren Aufzeichnungsbereich (110) aufgezeichnet sind.

3. Optische Platte (100) nach Anspruch 1 oder 2, wobei Adressdaten, die Adressen jeder der ersten und zweiten Aufzeichnungseinheiten anzeigen, auf der optischen Platte (100) aufgezeichnet sind, Längen der Adressdaten, die Adressen jeder der ersten Aufzeichnungseinheiten anzeigen, gleich der Länge jeder der ersten Aufzeichnungseinheiten sind und Längen der Adressdaten, die Adressen jeder der zweiten Aufzeichnungseinheiten anzeigen, gleich der Länge jeder der zweiten Aufzeichnungseinheiten sind.

4. Optische Platte (100) nach Anspruch 3, wobei die Länge jeder der zweiten Aufzeichnungseinheiten ein ganzzahliges Mehrfaches der Länge jeder der ersten Aufzeichnungseinheiten ist und die Ganzzahl größer als 1 ist.

5. Optische Platte (100) nach Anspruch 3 oder 4, wobei die Adressdaten, die Adressen jeder der zweiten Aufzeichnungseinheiten anzeigen, als erste Adressdaten und als zweite Adressdaten aufgezeichnet sind, wobei die ersten Adressdaten und die zweiten Adressdaten jeweils die Länge jeder der ersten Aufzeichnungseinheiten aufweisen.

6. Optische Platte (100) nach einem der vorhergehenden Ansprüche, wobei die vorgegebene Spur des ersten Aufzeichnungsbereichs (110) eine innerste Spur der optischen Platte (100) ist.

7. Optische Platte (100) nach einem der vorhergehenden Ansprüche, wobei die vorgegebene Spur der optischen Platte (100) einer Form eines Wobbelsignals entsprechend ausgebildet ist.

8. Optische Platte (100) nach Anspruch 7, wobei das Wobbelsignal durch Wobbelmodulation von Adressinformationen für die ersten und die zweiten Aufzeichnungseinheiten erzeugt wird.

9. Optische Platte (100) nach Anspruch 8, wobei die Wobbelmodulation eine von monotoner Wobbelung (MW), Sägezahn-Wobbelung (STW), binärer Phasenmodulation (BPSK) und Frequenzmodulation (FSK) ist.

10. Optische Platte (100) nach Anspruch 7, 8 oder 9, wobei das Wobbelsignal eine Adresse von einer von der ersten der zweiten Aufzeichnungseinheit anzeigt und das Wobbelsignal eine Länge aufweist, die gleich derjenigen der ersten oder der zweiten Aufzeichnungseinheiten ist.

11. Optische Platte (100) nach einem der vorhergehenden Ansprüche, wobei
sich der innere Aufzeichnungsbereich (110) von einem innersten Umfang bis zu einem vorgegebenen Umfang der optischen Platte (100) erstreckt und
sich der äußere Aufzeichnungsbereich (130) von dem vorgegebenen Umfang bis zu einem äußersten Umfang erstreckt.

12. Datenaufzeichnungsvorrichtung für eine optische Platte (100), die einen inneren Aufzeichnungsbereich (110) und einen äußeren Aufzeichnungsbereich (130) aufweist, wobei die Vorrichtung umfasst:
einen optischen Kopf (210) und
eine Steuereinheit (260), eingerichtet, um den optischen Kopf (210) zu steuern,
und **dadurch gekennzeichnet ist, dass**
die Steuereinheit (260) eingerichtet ist, um den optischen Kopf (210) zu steuern, um Daten in ersten Aufzeichnungseinheiten in dem inneren Aufzeichnungsbereich (110) aufzuzeichnen, wobei jede der ersten Aufzeichnungseinheiten eine kürzere Länge als eine vorgegebene Spur des inneren Aufzeichnungsbereichs (110) in dem inneren Aufzeichnungsbereich (110) aufweist, und um die Daten in zweiten Aufzeichnungseinheiten in dem äußeren Aufzeichnungsbereich (130) aufzuzeichnen, wobei jede der zweiten Aufzeichnungseinheiten eine größere Länge als jede der ersten Aufzeichnungseinheiten aufweist.

13. Datenaufzeichnungsvorrichtung nach Anspruch 12, die des Weiteren eine optische Informationsspeichereinheit (240) der optischen Platte umfasst, in der Adressinformationen des inneren Aufzeichnungsbereichs (110) und des äußeren Aufzeichnungsbereichs (260) gespeichert sind, wobei die Steuereinheit (260) den optischen Kopf (210) steuert, um die Daten in dem inneren Aufzeichnungsbereich (110) und in dem äußeren Auszeichnungsbereich (130) jeweils durch Bezugnahme auf die in der Informationsspeichereinheit (240) der optischen Platte (100) gespeicherten Adressinformationen aufzuzeichnen.

14. Datenaufzeichnungsvorrichtung nach Anspruch 12 oder 13, wobei die Steuereinheit (260) den optischen Kopf (210) steuert, um in Reaktion auf die Daten, die in dem inneren Aufzeichnungsbereich (110) gespeichert sind, identische Daten in wenigstens zwei der ersten Aufzeichnungseinheiten aufzuzeichnen.

15. Datenaufzeichnungsvorrichtung nach Anspruch 12, 13 oder 14, wobei sich der innere Aufzeichnungsbereich (110) von einem innersten Umfang bis zu einem vorgegebenen Umfang der optischen Platte (100) erstreckt und sich der äußere Aufzeichnungsbereich (130) von dem vorgegebenen Umfang bis zu einem äußersten Umfang erstreckt.

16. Verfahren zum Aufzeichnen von Daten auf einer optischen Platte (100), wobei das Verfahren **gekennzeichnet ist durch** die folgenden Schritte:
Auswählen eines Datenaufzeichnungsbereichs aus einem von einem inneren Aufzeichnungsbereich (110) und einem äußeren Aufzeichnungsbereich (130) und
Aufzeichnen der Daten in ersten Aufzeichnungseinheiten, wobei jede der ersten Aufzeichnungseinheiten eine kürze Länge als eine vorgegebene Spur des inneren Aufzeichnungsbereichs (110) aufweist, in Reaktion auf die Daten, die in dem inneren Aufzeichnungsbereich (110) aufgezeichnet sind, und
Aufzeichnen der Daten in zweiten Aufzeichnungseinheiten, wobei jede der zweiten Aufzeichnungseinheiten eine längere Länge als die ersten Aufzeichnungseinheiten aufweist, in Reaktion auf die Daten, die in dem äußeren Aufzeichnungsbereich (130) aufgezeichnet sind.

17. Verfahren nach Anspruch 16, wobei in Reaktion auf die Daten, die in dem inneren Aufzeichnungsbereich (110) aufgezeichnet sind, identische Daten in wenigsten zwei der ersten Aufzeichnungseinheiten aufgezeichnet werden.

18. Verfahren nach Anspruch 16 oder 17, wobei sich der innere Aufzeichnungsbereich (110) von einem innersten Umfang bis zu einem vorgegebenen Umfang der optischen Platte (100) erstreckt und sich der äußere Aufzeichnungsbereich (130) von dem vorgegebenen Umfang bis zu einem äußersten Umfang erstreckt.

19. Aufzeichnungsmedium mit darauf aufgezeichneten Befehlen, die durch einen Computer umgesetzt werden können, um das Verfahren nach einem der Ansprüche 16 bis 18 durchzuführen.

## Revendications

1. Disque optique (100) comportant une pluralité de zones d'enregistrement (110, 130) ;
sur lequel sont enregistrées :
des premières unités d'enregistrement dans une zone d'enregistrement interne (110) qui sont plus courtes qu'une piste prédéterminée de la zone d'enregistrement interne (110) ; et
des secondes unités d'enregistrement dans une zone d'enregistrement externe (130) qui sont plus longues que les unités d'enregistrement dans la zone d'enregistrement interne (110).

2. Disque optique (100) selon la revendication 1, dans lequel sont enregistrées des données identiques dans au moins deux des unités d'enregistrement dans la zone d'enregistrement interne (110).

3. Disque optique (100) selon la revendication 1 ou 2, dans lequel des données d'adresse indiquant des adresses de chacune des premières et secondes unités d'enregistrement sont enregistrées sur le disque optique (100), des longueurs des données d'adresse indiquant l'adresse de chacune des premières unités d'enregistrement sont égales à la longueur de chacune des premières unités d'enregistrement, et des longueurs des données d'adresse indiquant l'adresse de chacune des secondes unités d'enregistrement sont égales à la longueur de chacune des secondes unités d'enregistrement.

4. Disque optique (100) selon la revendication 3, dans lequel la longueur de chacune des secondes unités d'enregistrement est un multiple entier de la longueur de chacune des premières unités d'enregistrement, et le nombre entier est supérieur à 1.

5. Disque optique (100) selon la revendication 3 ou 4, dans lequel les données d'adresse indiquant les adresses de chacune des secondes unités d'enregistrement sont enregistrées en tant que des premières données d'adresse et des secondes données d'adresse, les premières données d'adresse et les secondes données d'adresse ayant chacune la longueur de chacune des premières unités d'enregistrement.

6. Disque optique (100) selon l'une quelconque des revendications précédentes, dans lequel la piste prédéterminée de la première zone d'enregistrement (110) est une piste la plus intérieure du disque optique (100).

7. Disque optique (100) selon l'une quelconque des revendications précédentes, dans lequel la piste prédéterminée du disque optique (100) est formée selon une forme d'un signal de vobulation.

8. Disque optique (100) selon la revendication 7, dans lequel le signal de vobulation est généré en ululant des informations d'adresse pour les premières et secondes unités d'enregistrement.

9. Disque optique (100) selon la revendication 8, dans lequel l'ululation est l'une parmi une vobulation monotone (MW), une vobulation en dent de scie (STW), une modulation par déplacement de phase binaire (BPSK), et une modulation par déplacement de fréquence (FSK).

10. Disque optique (100) selon la revendication 7, 8 ou 9, dans lequel le signal de vobulation indique une adresse de l'une des premières ou secondes unités d'enregistrement, et le signal de vobulation a une longueur égale à celle des premières ou secondes unités d'enregistrement.

11. Disque optique (100) selon l'une quelconque des revendications précédentes dans lequel :
la zone d'enregistrement interne (110) s'étend d'une circonférence la plus intérieure à une circonférence prédéterminée du disque optique (100) ; et
la zone d'enregistrement externe (130) s'étend de la circonférence prédéterminée à une circonférence la plus extérieure.

12. Dispositif d'enregistrement de données pour un disque optique (100) ayant une zone d'enregistrement interne (110) et une zone d'enregistrement externe (130), le dispositif comportant :
une tête optique (210) ; et
une unité de commande (260) agencée pour commander la tête optique (210) ;
**caractérisé en ce que** :
l'unité de commande (260) est agencée pour commander la tête optique (210) afin d'enregistrer des données dans des premières unités d'enregistrement, chacune des premières unités d'enregistrement ayant une longueur plus courte que celle d'une piste prédéterminée de la zone d'enregistrement interne (110), dans la zone d'enregistrement interne (110), et pour enregistrer les données dans les secondes unités d'enregistrement, chacune des secondes unités d'enregistrement ayant une longueur supérieure à celle de chacune des premières unités d'enregistrement, dans la zone d'enregistrement externe (130).

13. Dispositif d'enregistrement de données selon la revendication 12, comportant en outre une unité de stockage d'informations de disque optique (240) dans laquelle des information d'adresse de la zone d'enregistrement interne (110) et de la zone d'enregistrement externe (130) sont stockées, où l'unité de commande (260) commande la tête optique (210) pour enregistrer les données dans la zone d'enregistrement interne (110) et la zone d'enregistrement externe (130), respectivement, en se référant aux informations d'adresse stockées dans l'unité de stockage d'informations (240) de disque optique (100).

14. Dispositif d'enregistrement de données selon la revendication 12 ou 13, dans lequel l'unité de commande (260) commande la tête optique (210) pour enregistrer des données identiques dans au moins deux des premières unités d'enregistrement en réponse au fait que les données sont enregistrées dans la zone d'enregistrement interne (110).

15. Dispositif d'enregistrement de données selon la revendication 12, 13 ou 14, dans lequel la zone d'enregistrement interne (110) s'étend d'une circonférence la plus intérieure à une circonférence prédéterminée du disque optique (100), et la zone d'enregistrement externe (130) s'étend de la circonférence prédéterminée à une circonférence la plus extérieure.

16. Procédé d'enregistrement de données sur un disque optique (100), le procédé étant **caractérisé par** les étapes consistant à :
sélectionner une zone d'enregistrement de données d'une parmi une zone d'enregistrement interne (110) et une zone d'enregistrement externe (130) ; et
enregistrer les données dans des premières unités d'enregistrement, chacune des premières unités d'enregistrement ayant une longueur plus courte que celle d'une piste prédéterminée de la zone d'enregistrement interne (110), en réponse au fait que les données sont enregistrées dans la zone d'enregistrement interne (110) ; et
enregistrer les données dans les secondes unités d'enregistrement, chacune des secondes unités d'enregistrement ayant une longueur supérieure à celle de chacune des premières unités d'enregistrement, en réponse au fait que les données sont enregistrées dans la zone d'enregistrement externe (130).

17. Procédé selon la revendication 16, dans lequel sont enregistrées des données identiques dans au moins deux des premières unités d'enregistrement en réponse au fait de les données sont enregistrées dans la zone d'enregistrement interne (110).

18. Procédé selon la revendication 16 ou 17, dans lequel la zone d'enregistrement interne (110) s'étend d'une circonférence la plus intérieure à une circonférence prédéterminée du disque optique (100), et la zone d'enregistrement externe (130) s'étend de la circonférence prédéterminée à une circonférence la plus extérieure.

19. Support d'enregistrement sur lequel sont enregistrées des instructions pouvant être mises en oeuvre par un ordinateur pour exécuter le procédé selon l'une quelconque des revendications 16 à 18.
